Europäisches Patentamt

European Patent Office

Office européen des brevets

(19)

(11) Veröffentlichungsnummer: **0 158 631**
**A2**

(12) # EUROPÄISCHE PATENTANMELDUNG

(21) Anmeldenummer: 85890093.9

(22) Anmeldetag: 09.04.85

(51) Int. Cl.⁴: **F 16 L 3/12**
F 16 L 3/14, F 16 L 3/04
B 29 C 67/14, B 29 C 41/20

(30) Priorität: 11.04.84 AT 1221/84

(43) Veröffentlichungstag der Anmeldung:
16.10.85 Patentblatt 85/42

(84) Benannte Vertragsstaaten:
BE CH DE FR GB IT LI LU NL SE

(71) Anmelder: Knoch, Kern & Co.
Ferdinand Jergitsch-Strasse 15
A-9010 Klagenfurt Kärnten(AT)

(72) Erfinder: Demarle, Robert
Heideweg 17
A-9373 St. Paul Kärnten(AT)

(74) Vertreter: Beer, Otto, Dipl.-Ing. et al,
Lindengasse 8
A-1071 Wien(AT)

(54) Rohr aus faserverstärktem, härtbarem Kunststoff, Verfahren zur Herstellung desselben und Vorrichtung zur Durchführung des Verfahrens.

(57) Ein Rohr aus faserverstärktem, härtbarem Kunststoff enthält eine oder mehrere Schicht(en) mit annähernd tangential und eine oder mehrere Schicht(en) mit annähernd parallel zu seiner Längsachse ausgerichteten, geschnittenen Verstärkungsfasern.

Bei der herstellung dieses Rohres im Schleuderverfahren in einer rotierenden Form werden die achsparallel ausgerichteten Fasern parallel zur Achse der Form zugeführt, in der Form abgebremst und ohne Änderung ihrer Orientierung quer zu ihrer Zuführrichtung beschleunigt.

Eine Vorrichtung zur Durchführung dieses Verfahrens besitzt eine in eine rotierende Form (14) einführbare Kammer (3) mit einer Austrittsöffnung (10) für geschnittene Fasern. In der Kammer (3) ist ein drehbarer Flügel (5) vorgesehen, mit dem eine quer zu seiner Drehachse (8) ausgerichtete Scheibe (9), die der in der Kammer (3) ausmündenden Zuführleitung (1) für Fasermaterial (2) gegenüberliegt, verbunden ist.

FIG.2

EP 0 158 631 A2

Rohr aus faserverstärktem, härtbarem Kunststoff, Verfahren zur Herstellung desselben und Vorrichtung zur Durchführung des Verfahrens

Die Erfindung betrifft ein Rohr aus faserverstärktem, härtbarem Kunststoff, wobei als Faserverstärkung im härtbaren Kunststoff geschnittene Fasern, insbesondere geschnittener Glasroving, enthalten sind und wobei das Rohr eine oder mehrere Schicht(en) im annähernd tangential ausgerichteten Verstärkungsfasern und eine oder mehrere weitere gefüllte Schicht(en) aufweist.

Derartige Rohre sind beispielsweise aus den AT-PSen 304 202 und 323 485 bekannt. Diese im Schleuderverfahren hergestellten Rohre haben aber keinen nennenswerten Anteil an in Achsrichtung orientierten Fasern, was insbesondere bei Rohren mit kleineren Durchmessern Probleme hinsichtlich der Axialbelastung, d. h. wenn die Rohre auf Biegung belastet werden, mit sich bringt. Um dieses Problem zu lösen, ist schon vorgeschlagen worden, zur Armierung von Rohren Fasergewebe (Fasermatten) zu verwenden, was aber den Nachteil mit sich bringt, daß das Schleuderverfahren zur Herstellung von Rohren nicht mehr ohne weiteres angewendet werden kann, da die Armierung aufgewickelt werden muß und erst in der Rohrform durch Abwickeln eingebracht werden kann. Dies gilt auch für das aus der DE-OS 28 42 530 bekannte Rohr, was sich daraus erhellt, daß die Glasfasern bei diesem bekannten Rohr in den beiden Rohrschichten unter 80 bis 88° bzw. 2 bis 10° zur Rohrachse geneigt orientiert sind. Eine Orientierung unter 90 bzw. 0° zur Rohrachse ist bekanntlich im Wickelverfahren nicht erzielbar.

Aus der DE-OS 27 26 499 ist ein aus mehreren Schichten aufgebautes Rohr bekannt, wobei u. a. Schichten mit in Umfangsrichtung, d. h. tangential-orientierten Glasfaserstücken und Schichten mit wahllos orientierten Glasfaserstücken vorgesehen sind. Schichten, die achsparallel-orientierte Faserstücke enthalten, sind in diesem bekannten Rohr nicht enthalten.

Die DE-OS 31 33 091 beschreibt einen Schrumpfformteil mit achsparallelen, "gebündelten Einzelfäden", d. h. durchgehenden Fasern, die mit geschnittenen Fasern nicht vergleichbar sind und dazu dienen, das axiale Schrumpfen des Formteils zu unterbinden. Tangential-orientierte Faser(stücke) sind nicht vorgesehen, da diese das radiale Schrumpfen des Formteiles der DE-OS 31 33 091    verhindern würden.

Die im aus der FR-OS 2 310 517 bekannten Rohr enthaltenen, axial orientierten Fasern sind keine geschnittenen Fasern und liegen teils in Form von durchgehenden Karbonfasern und teils in Form von Glasfasergeweben vor.

Der Erfindung liegt demnach die Aufgabe zugrunde, ein Rohr der eingangs genannten Gattung anzugeben, das auch bei kleineren Durchmessern gegenüber in Achsrichtung wirkenden Belastungen hinreichend widerstandsfähig ist.

Erfindungsgemäß wird dies dadurch erreicht, daß das Rohr in einer oder mehreren weiteren Schicht(en) eine Faserverstärkung aufweist, deren geschnittene Fasern annähernd parallel zur Längsachse des Rohres ausgerichtet sind.

Dadurch, daß im erfindungsgemäßen Rohr neben der Schicht, in der tangential ausgerichtete, geschnittene Verstärkungsfasern enthalten sind, wenigstens eine Schicht vorgesehen ist, in der die geschnittenen Verstärkungsfasern annähernd parallel zur Längsachse des Rohres, d. h. annähernd axial ausgerichtet sind, ergibt sich der überraschende Vorteil, daß man den Gesamtfaseranteil bei unveränderter Festigkeit gegenüber Tangential- und Axialbelastung verringern kann. Dies ergibt sich einfach daraus, daß beim erfindungsgemäßen Rohr die Faserverstärkung gezielt in den gewünschten Richtungen orientiert ist, so daß auch bei geringerem Gesamtfaseranteil die gewünschten Festigkeitswerte erzielbar sind.

Besonders geeignet ist die Erfindung für Rohre, die einen Durchmesser bis 600 mm, vorzugsweise einen Durchmesser von 150 bis 400 mm besitzen.

Das Tangential-Axial-Festigkeitsverhältnis wird erfindungsgemäß bevorzugt so gewählt, daß es in der mit tangential- und mit achsparallel-orientierten Fasern armierten Schicht 5 : 3 beträgt.

Mit Vorteil kann im Rahmen der Erfindung vorgesehen sein, daß die achsparallel-orientierte Fasern enthaltende Schicht(en) des Rohres mittelbar oder unmittelbar zwischen zwei tangential-orientierte Fasern enthaltenden Schicht(en) angeordnet ist (sind). Dieser schichtenförmige Aufbau des erfindungsgemäßen Rohres läßt sich im Schleuderverfahren besonders einfach erzielen und ergibt besonders stabile Rohre.

Im erfindungsgemäßen Rohr können auch mehrere voneinander getrennte Schichten mit achsparallel und/oder tangential-orientierten Fasern vorgesehen sein. In diesem Fall ist es bevorzugt, wenn außerhalb der achsparallel-orientierten Fasern enthaltenden Schicht von dieser durch eine Schicht mit tangential-orientierten Fasern getrennt eine achsparallel orientierte Fasern und eine weitere Füllstoff, wie Sand od. dgl. enthaltende Schicht vorgesehen ist.

Die Erfindung betrifft weiters ein Verfahren zur Herstellung der erfindungsgemäßen faserverstärkten Rohre aus härtbarem Kunststoff im Schleuderverfahren, bei dem man die Fasern und den Kunststoff sowie allenfalls in der Rohrwandung enthaltene weitere Füllstoffe einer horizontal rotierbaren Form achsparallel zu dieser zuführt, wobei man die Fasern schneidet und die geschnittenen Fasern, insbesondere Glasfaserrovings in das Innere der rotierenden Form über deren Längsrichtung verteilt einträgt und wobei die tangential zu orientierenden Fasern aus der Zuführeinrichtung für die Fasern tangential zur Rohrwandung orientiert austretend in die Form abgelegt werden.

Derartige Schleuderverfahren sind aus den AT-PSen 300 333, 304 202 und 323 485 bekannt. Keines der vorgenannten Verfahren gibt aber irgendeine Anregung, wie die Faserarmierung der faserverstärkten Rohre beim Schleuderverfahren definiert abgelegt werden kann. Dies gilt insbesondere für die achsparallel auszurichtende Faserarmierung, da die tangential auszurichtende Faserarmierung einfach durch eine Verteilvorrichtung eingetragen werden kann, deren freies Ende innerhalb der Schleuderform tangential und in Drehrichtung weisend ausmündet.

Der Erfindung liegt demnach weiters die Aufgabe zugrunde, ein Verfahren anzugeben, mit dem insbesondere axial ausgerichtete Verstärkungsfasern definiert abgelegt werden können.

Diese Aufgabe wird im Rahmen der Erfindung dadurch gelöst, daß man die im herzustellenden Rohr mit achsparalleler Orientierung enthaltenen Fasern parallel zur Drehachse der Form ausgerichtet in die Form einführt und ihnen an der Ablegestelle vorzugsweise nach dem Abbremsen ihrer Axialbewegung eine quer zu ihrer Bewegungsrichtung beim Zuführen in die Form orientierte Beschleunigung erteilt, und daß die Fasern vorzugsweise ohne Änderung der Orientierung, d. h. annähernd parallel zur Längsachse der rotierbaren Form in diese eingetragen werden.

Mit dem erfindungsgemäßen Verfahren können die geschnittenen Fasern getrennt in Umfangs- oder Längsrichtung des herzustellenden Rohres abgelegt werden. Überdies ist es möglich, bei Verwendung von Glasfasern handelsübliche Schneidroving zu verwenden. Das Ablegen der in Längsrichtung (axial) orientierten, geschnittenen Fasern gelingt mit dem erfindungsgemäßen Verfahren deswegen problemlos, weil die achsparallel abzulegenden Rovings am Ende der Zuleitung erst nach dem Abbremsen in Umfangsrichtung beschleunigt werden, so da der geschnittene Roving achsparallel in der Schleuderform abgelegt wird.

Besonders sicher und zuverlässig gelingt die Beschleunigung der in Achsrichtung orientiert abzulegenden Fasern, wenn man die in Achsrichtung orientiert abzulegenden Fasern beim Ablegen in die Form mechanisch und/oder pneumatisch quer zu ihrer Zuführrichtung beschleunigt.

Werden nach dem erfindungsgemäßen Verfahren Rohre mit kleineren Durchmessern, d. h. unter 600 mm, vorzugsweise 150 bis 400 mm Durchmesser hergestellt, dann empfiehlt es sich, um die Aushärtung des Kunststoffes sicherzustellen, so vorzugehen, daß man die rotierbare Form auf eine Temperatur von 40°C bis 60°C, insbesondere 50°C bis 55°C vorwärmt, bevor man die unter Erwärmung aushärtenden Kunststoffe in die rotierbare Form einbringt, und daß man das noch warme Rohr aus der rotierbaren Form, vorzugsweise durch Herausziehen in Richtung der Längs- bzw. Drehachse entfernt.

Die Erfindung betrifft schließlich eine Vorrichtung zur Durchführung des erfindungsgemäßen Verfahrens mit einer rotierbaren Rohrform sowie einer Einrichtung zum Zuführen des Fasermaterials und des Kunststoffes in die Rohrform, die über eine Leitung mit einer Verteileinrichtung für das tangential orientierte Fasermaterial und den Kunststoff verbunden ist, wobei die Verteileinrichtung in das Innere der rotierbaren Rohrform ragt und wobei Rohrform und Verteileinrichtung relativ zueinander in Richtung der Dreh- bzw. Längsachse der Rohrform beweglich sind, und mit einer Einrichtung zum Schneiden des Fasermaterials.

Derartige Vorrichtungen zur Herstellung von Rohren im Schleuderverfahren sind beispielsweise aus den AT-PSen 266 340, 300 333, 304 064 und 327 532 bekannt. Mit keiner der bekannten Vorrichtungen ist es aber möglich, in Achsrichtung der rotierenden Schleuderform ausgerichtete Fasern gezielt abzulegen.

Es ist demnach weiters die Aufgabe der vorliegenden Erfindung, eine Vorrichtung der oben genannten Art anzugeben, mit der Schleuderrohre hergestellt werden können, die wenigstens eine Schicht mit in Achsrichtung orientierten, geschnittenen Verstärkungsfasern besitzen.

In Lösung dieser Aufgabe zeichnet sich die erfindungsgemäße Vorrichtung dadurch aus, daß eine Verteileinrichtung für das achsparallel-orientierte Fasermaterial vorgesehen ist, wobei an das in das Innere der drehbaren Rohrform ragende Ende der Zuführleitung - für das achsparallel-orientierte Fasermaterial - eine vorzugsweise zylinderförmige Kammer angeschlossen ist, wobei in der Kammer ein durch einen Motor antreibbarer, um eine zur Drehachse der Rohrform parallele Achse drehbarer Flügel angeordnet ist, daß weiters eine mit dem Flügel drehfest verbundene, quer zu seiner Drehachse ausgerichtete und der Mündung der Zuführleitung gegenüberliegende Scheibe vorgesehen ist, und daß die Kammer an ihrer Mantelfläche eine Austragöffnung für die Verstärkungsfasern aufweist.

In der erfindungsgemäßen Vorrichtung werden die in Achsrichtung abzulegenden Fasern in der an die Zuführleitung für das Fasermaterial angeschlossenen Kammer durch die Scheibe abgebremst und durch den sich rasch drehenden Flügel quer zu ihrer Bewegungsrichtung beschleunigt, so daß sie unter der Wirkung der auftretenden Fliehkraft unter Beibehaltung ihrer achsparallelen Orientierung durch die Austragöffnung aus der Kammer austreten und in die Rohrform abgelegt werden.

Eine besonders hohe Wirksamkeit des erfindungsgemäß vorgesehenen Flügels ergibt sich, wenn der in der Kammer drehbar gelagerte Flügel kürzer ist als die Kammer und in seiner Breite annähernd dem Durchmesser der Kammer entspricht, wobei zwischen der Stirnwand der Kammer und dem Flügel ein Abstand vorliegt.

Im Sinne einer weiteren Verbesserung der Bewegungen innerhalb der Kammer kann vorgesehen sein, daß die Zuführleitung für das Fasermaterial in der Kammer in ihrer Stirnwand exzentrisch ausmündet, wobei bevorzugt ist, daß die Zuführleitung in der Stirnwand der Kammer bezüglich ihrer Mittellängsachse bzw. der Drehachse des Flügels auf der Austragsöffnung gegenüberliegenden Seite ausmündet.

Um die aus der Kammer austretenden, geschnittenen Fasern auch außerhalb der Kammer möglichst lange zu führen und Änderungen ihrer Ausrichtung zu verhindern, kann im Rahmen der Erfindung vorgesehen sein, daß an das in Drehrichtung des Flügels gesehen hintere Längsende der Austragsöffnung ein annähernd tangentia zum zylinderförmigen Mantel der Kammer orientiertes Leitblech vorgesehen ist. Dabei ist bevorzugt, daß das Leitblech annähernd tangential zur Mantelfläche der drehbaren Rohrform ausgerichtet ist.

Bei der erfindungsgemäßen Vorrichtung können sowohl die tangential als auch die achsparallel abzulegenden Verstärkungsfasern bereits in einer außerhalb der rotierbaren Rohrform angeordneten Schneidvorrichtung geschnitten werden. Dies hat den Vorteil, daß innerhalb der Rohrform bei der Verteileinrichtung keine Schneideeinrichtungen vorgesehen werden müssen, so daß auch vergleichsweise kleine Rohre hergestellt werden können.

Bei der erfindungsgemäßen Vorrichtung ist es aber ohne Erhöhung des Raumbedarfes ohne weiteres möglich, die Verteileinrichtung für die achsparallel abzulegenden Fasern auch für das Schneiden dieser Fasern heranzuziehen. Dies gelingt in überraschend einfacher Weise dadurch, daß die der Zuführleitung benachbarte Kante des Flügels als Schneidkante für das Abschneiden des Fasermaterials, insbesondere der Glasfaserrovings ausgebildet ist.

Nachstehend werden einige, nicht beschränkte Ausführungsbeispiele für erfindungsgemäße Rohre angegeben, wobei folgende Symbole verwendet werden:

DN: Nennweite

SN: Nennsteifigkeit

OL: Außendeckschicht (Outliner, reines Harz)

GS: axial orientierte Glasfasern und Sand als Füllmittel

GA: axial orientierte Glasfasern

GT: tangential orientierte Glasfasern

DS: Innendeckschichte (Inliner) aus besonders elastischem und/oder chemikalienbeständigem Reinharz

Beispiel 1

Schleuderrohr DN 150   SN 10 000    PN 1
(Kunstharz: ungesättigtes Polyesterharz)

| | |
|---|---|
| Wanddicke | 4,4 mm |
| Rohrsteifigkeit | 10 099 N/m² |
| mittlerer Biegemodul | 6 229 N/mm² |
| Wandsteifigkeit | 44 kN/mm² |
| Längszugkraft | 123,7 N/mm |
| Berstdruck | 42,5 bar |
| Ringzugkraft | 348,3 N/mm |
| Umfangsdehnung bei 1 bar | 0,01% |

Aufbau des Rohres   (von außen nach innen)
— — — — — — — — — — — — — — — — — — —

| Schichtdicke | | | Glasfaseranteil |
|---|---|---|---|
| | | | Laminatart: |
| Schicht 1 | 0,3 mm | OL | 0,0 % |
| Schicht 2 | 0,2 mm | GT | 50,0 % |
| Schicht 3 | 1,4 mm | GS | 5,0 % |
| Schicht 4 | 0,0 mm | GT | 50,0 % |
| Schicht 5 | 0,5 mm | GA | 38,0 % |
| Schicht 6 | 1,0 mm | GT | 38,0 % |
| Schicht 7 | 1,0 mm | DS | 0,0 % |

Materialbedarf der Schichten
— — — — — — — — — — — — — — —

| | Harz | | Glas | | Sand | | DS | |
|---|---|---|---|---|---|---|---|---|
| | kg | % | kg | % | kg | % | kg | % |
| Schicht 1 | 0,0 | 0 | 0,0 | 0 | 0,0 | 0 | 1,2 | 100 |
| Schicht 2 | 0,5 | 50 | 0,5 | 50 | 0,0 | 0 | 0,0 | 0 |
| Schicht 3 | 2,1 | 24 | 0,4 | 5 | 6,4 | 71 | 0,0 | 0 |
| Schicht 4 | 0,0 | 50 | 0,0 | 50 | 0,0 | 0 | 0,0 | 0 |
| Schicht 5 | 1,5 | 62 | 0,9 | 38 | 0,0 | 0 | 0,0 | 0 |
| Schicht 6 | 3,0 | 62 | 1,8 | 38 | 0,0 | 0 | 0,0 | 0 |
| Schicht 7 | 0,0 | 0 | 0,0 | 0 | 0,0 | 0 | 3,8 | 100 |

Glasverteilung: außen 41 %,  innen 59 %

Beispiel 2

Schleuderrohr   DN 200 SN 5 000   PN 6
(Kunstharz: ungesättigtes Polyesterharz)

| Wanddicke | 4,6 mm |
|---|---|
| Rohrsteifigkeit | 5 227 N/m² |
| mittlerer Biegemodul | 6 441 N/mm² . |
| Wandsteifigkeit | 52 kN/mm² |
| Längszugkraft | 137,1 N/mm |
| Berstdruck | 33,8 bar |
| Ringzugkraft | 365 N/mm |
| Umfangsdehnung bei 6 bar | 0,11 % |

Aufbau des Rohres
— — — — — — — —

| Schichtdicke | | Glasfaseranteil Laminatart: | |
|---|---|---|---|
| Schicht 1 | 0,3 mm | OL | 0,0 % |
| Schicht 2 | 0,2 mm | GT | 50,0 % |
| Schicht 3 | 1,6 mm | GS | 8,0 % |
| Schicht 4 | 0,0 mm | GT | 50,0 % |
| Schicht 5 | 0,5 mm | GA | 38,0 % |
| Schicht 6 | 1,0 mm | GT | 38,0 % |
| Schicht 7 | 1,0 mm | DS | 0,0 % |

Glasverteilung: außen 41 %,  innen 59 %

Materialbedarf der Schichten
- - - - - - - - - - - - - -

| | Harz | | Glas | | Sand | | DS | |
|---|---|---|---|---|---|---|---|---|
| | kg | % | kg | % | kg | % | kg | % |
| Schicht 1 | 0,0 | 0 | 0,0 | 0 | 0,0 | 0 | 1,6 | 100 |
| Schicht 2 | 0,7 | 50 | 0,7 | 50 | 0,0 | 0 | 0,0 | 0 |
| Schicht 3 | 3,4 | 26 | 1,1 | 8 | 8,8 | 66 | 0,0 | 0 |
| Schicht 4 | 0,0 | 50 | 0,0 | 50 | 0,0 | 0 | 0,0 | 0 |
| Schicht 5 | 2,0 | 62 | 1,2 | 38 | 0,0 | 0 | 0,0 | 0 |
| Schicht 6 | 3,9 | 62 | 2,4 | 38 | 0,0 | 0 | 0,0 | 0 |
| Schicht 7 | 0,0 | 0 | 0,0 | 0 | 0,0 | 0 | 5,1 | 100 |

Glasverteilung: außen 41 %, innen 59%

### Beispiel 3

Schleuderrohr DN 250   SN 5 000   PN 10
(Kunstharz: ungesättigtes Polyesterharz)

| | |
|---|---|
| Wanddicke | 5,3 mm |
| Rohrsteifigkeit | 5 203 N/m² |
| mittlerer Biegemodul | 8 079 N/mm² |
| Wandsteifigkeit | 101 kN/mm² |
| Längszugkraft | 186,8 N/mm |
| Berstdruck | 49,7 bar |
| Ringzugkraft | 663,9 N/mm |
| Umfangsdehnung bei 10 bar | 0,18 % |

Aufbau des Rohres
- - - - - - - -

| Schichtdicke | | Glasfaseranteil | | |
|---|---|---|---|---|
| | | Laminatart: | | |
| Schicht 1 | 0,3 mm | OL | 0,0 | % |
| Schicht 2 | 1,2 mm | GT | 50,0 | % |
| Schicht 3 | 1,3 mm | GS | 10,0 | % |
| Schicht 4 | 0,0 mm | GT | 50,0 | % |

Aufbau des Rohres (Fortsetzung)
- - - - - - - -

Schichtdicke              Glasfaseranteil
                          Laminatart:

Schicht 5    0,5 mm       GA        38,0 %
Schicht 6    1,0 mm       GT        38,0 %
Schicht 7    1,0 mm       DS         0,0 %

Materialbedarf der Schichten
- - - - - - - - - - - - - - - -

|            | Harz |   | Glas |   | Sand |   | DS |    |
|------------|------|---|------|---|------|---|----|----|
|            | kg   | % | kg   | % | kg   | % | kg | %  |
| Schicht 1  | 0,0  | 0 | 0,0  | 0 | 0,0  | 0 | 2,0 | 100 |
| Schicht 2  | 5,2  | 50 | 5,2 | 50 | 0,0 | 0 | 0,0 | 0 |
| Schicht 3  | 3,5  | 27 | 1,3 | 10 | 8,3 | 63 | 0,0 | 0 |
| Schicht 4  | 0,0  | 50 | 0,0 | 50 | 0,0 | 0 | 0,0 | 0 |
| Schicht 5  | 2,4  | 62 | 1,5 | 38 | 0,0 | 0 | 0,0 | 0 |
| Schicht 6  | 4,8  | 62 | 3,0 | 38 | 0,0 | 0 | 0,0 | 0 |
| Schicht 7  | 0,0  | 0 | 0,0 | 0 | 0,0 | 0 | 6,3 | 100 |

Glasverteilung: außen 57 %, innen 43 %

Beispiel 4

Schleuderrohr DN 250  SN 10 000 PN 32
(Kunstharz: ungesättigtes Polyesterharz)

Wanddicke                    8 mm
Rohrsteifigkeit              23 391 N/m²
mittlerer Biegemodul         10 087 N/mm²
Wandsteifigkeit              434 kN/mm²
Längszugkraft                353,1 N/mm
Berstdruck                   138 bar
Ringzugkraft                 1 822 N/mm
Umfangsdehnung bei 32 bar    0,31 %

Aufbau des Rohres
‒ ‒ ‒ ‒ ‒ ‒ ‒ ‒ ‒ ‒

| Schichtdicke | | Glasfaseranteil Laminatart: | |
|---|---|---|---|
| Schicht 1 | 0,3 mm | OL | 0,0 % |
| Schicht 2 | 5,2 mm | GT | 50,0 % |
| Schicht 3 | 0,5 mm | GA | 38,0 % |
| Schicht 4 | 1,0 mm | GT | 38,0 % |
| Schicht 5 | 1,0 mm | DS | 0,0 % |

Materialbedarf der Schichten
‒ ‒ ‒ ‒ ‒ ‒ ‒ ‒ ‒ ‒ ‒ ‒ ‒

| | Harz | | Glas | | Sand | | DS | |
|---|---|---|---|---|---|---|---|---|
| | kg | % | kg | % | kg | % | kg | % |
| Schicht 1 | 0,0 | 0 | 0,0 | 0 | 0,0 | 0 | 2,0 | 100 |
| Schicht 2 | 22,1 | 50 | 22,1 | 50 | 0,0 | 0 | 0,0 | 0 |
| Schicht 3 | 2,4 | 62 | 1,5 | 38 | 0,0 | 0 | 0,0 | 0 |
| Schicht 4 | 4,7 | 62 | 2,9 | 38 | 0,0 | 0 | 0,0 | 0 |
| Schicht 5 | 0,0 | 0 | 0,0 | 0 | 0,0 | 0 | 6,2 | 100 |

Glasverteilung: außen 59 %, innen 41 %

Beispiel 5

Schleuderrohr   DN 300   SN 1 250   PN 1
(Kunstharz: ungesättigtes Polyesterharz)

| Wanddicke | 4,4 mm |
|---|---|
| Rohrsteifigkeit | 1 348 N/m² |
| mittlerer Biegemodul | 6 200 N/mm² |
| Wandsteifigkeit | 44 kN/mm² |
| Längszugkraft | 118 N/mm |
| Berstdruck | 21,3 bar |
| Ringzugkraft | 340,6 N/mm |
| Umfangsdehnung bei 1 bar | 0,03 % |

Aufbau des Rohres
— — — — — — — —

| Schichtdicke | | | Glasfaseranteil Laminatart: | |
|---|---|---|---|---|
| Schicht 1 | 0,3 mm | | OL | 0,0 % |
| Schicht 2 | 0,2 mm | | CT | 50,0 % |
| Schicht 3 | 1,4 mm | | GS | 3,0 % |
| Schicht 4 | 0,5 mm | | GA | 38,0 % |
| Schicht 5 | 1,0 mm | | GT | 38,0 % |
| Schicht 6 | 1,0 mm | | DS | 0,0 % |

Materialbedarf der Schichten
— — — — — — — — — — — — — —

| | Harz | | Glas | | Sand | | DS | |
|---|---|---|---|---|---|---|---|---|
| | kg | % | kg | % | kg | % | kg | % |
| Schicht 1 | 0,0 | 0 | 0,0 | 0 | 0,0 | 0 | 2,3 | 100 |
| Schicht 2 | 1,0 | 50 | 1,0 | 50 | 0,0 | 0 | 0,0 | 0 |
| Schicht 3 | 4,0 | 23 | 0,5 | 3 | 13,0 | 74,0 | 0,0 | 0 |
| Schicht 4 | 2,9 | 62 | 1,8 | 38 | 0,0 | 0,0 | 0,0 | 0 |
| Schicht 5 | 5,8 | 62 | 3,6 | 38 | 0,0 | 0,0 | 0,0 | 0 |
| Schicht 6 | 0,0 | 0 | 0,0 | 0 | 0,0 | 0 | 7,6 | 100 |

Glasverteilung: außen 38 %, innen 62 %

Beispiel 6

Schleuderrohr DN 350 SN 10 000 PN 20
(Kunstharz: ungesättigtes Polyesterharz)

| | |
|---|---|
| Wanddicke | 8,5 mm |
| Rohrsteifigkeit | 10 210 N/m² |
| mittlerer Biegemodul | 9 902 N/mm² |
| Wandsteifigkeit | 511 kN/mm² |
| Längszugkraft | 357 N/mm |
| Berstdruck | 91,6 bar |
| Ringzugkraft | 1 683,3 N/mm |
| Umfangsdehnung bei 20 bar | 0,27 % |

Aufbau des Rohres
- - - - - - -

| | Schichtdicke | | Glasfaseranteil Laminatart: | |
|---|---|---|---|---|
| Schicht 1 | 0,3 mm | OL | 0,0 % | |
| Schicht 2 | 4,6 mm | GT | 50,0 % | |
| Schicht 3 | 1,1 mm | GS | 12,0 % | |
| Schicht 4 | 0,0 mm | GT | 50,0 % | |
| Schicht 5 | 0,5 mm | GA | 38,0 % | |
| Schicht 6 | 1,0 mm | GT | 38,0 % | |
| Schicht 7 | 1,0 mm | DS | 0,0 % | |

Materialbedarf der Schichten
- - - - - - - - - - - - -

| | Harz | | Glas | | Sand | | DS | |
|---|---|---|---|---|---|---|---|---|
| | kg | % | kg | % | kg | % | kg | % |
| Schicht 1 | 0,0 | 0 | 0,0 | 0 | 0,0 | 0 | 2,7 | 100 |
| Schicht 2 | 27,2 | 50 | 27,2 | 50 | 0,0 | 0 | 0,0 | 0 |
| Schicht 3 | 4,2 | 28 | 1,8 | 12 | 9,0 | 60 | 0,0 | 0 |
| Schicht 4 | 0,0 | 50 | 0,0 | 50 | 0,0 | 0 | 0,0 | 0 |
| Schicht 5 | 3,3 | 62 | 2,0 | 38 | 0,0 | 0 | 0,0 | 0 |
| Schicht 6 | 6,6 | 62 | 4,1 | 38. | 0,0 | 0 | 0,0 | 0 |
| Schicht 7 | 0,0 | 0 | 0,0 | 0 | 0,0 | 0 | 8,6 | 100 |

Glasverteilung: außen 66%, 34 %

Die erfindungsgemäße Vorrichtung zur Herstellung von Schleuderrohren kann bis auf die Verteilvorrichtung für die axial orientierten Fasern einen weitgehend beliebigen so auch einen aus den vorgenannten Patentschriften bekannten grundsätzlichen Aufbau besitzen. Es wird demnach nachstehend lediglich die Verteileinrichtung für axial zu orientierendes Fasermaterial, die in der drehbaren Rohrform angeordnet ist, unter Bezugnahme auf die angeschlossenen Zeichnungen näher erläutert.

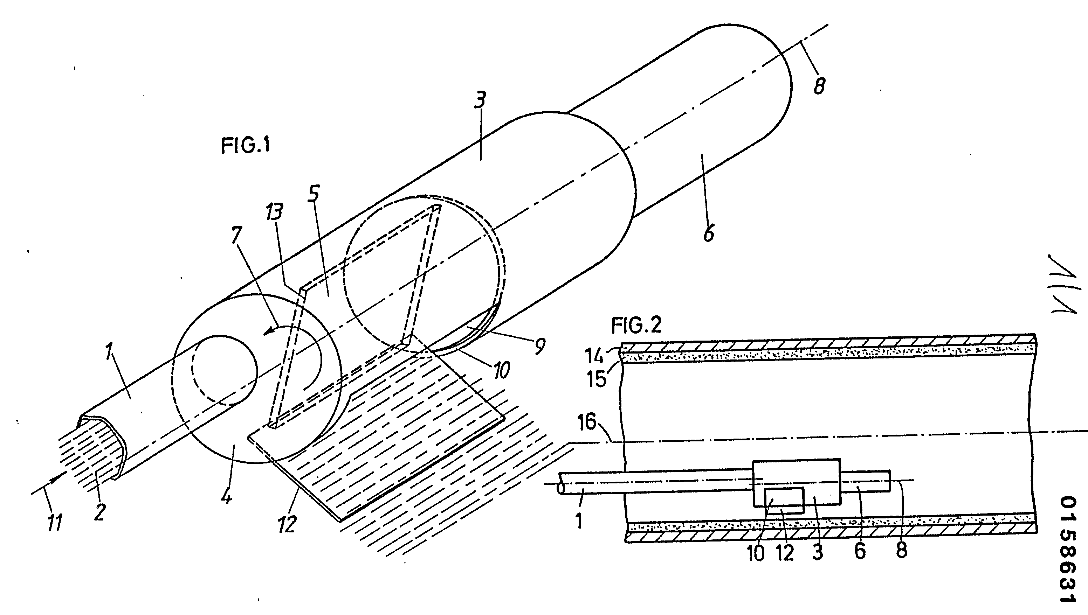

Dabei zeigt Fig. 1 eine Verteileinrichtung für axialorientierte Fasern und

Fig. 2 die Anordnung der Verteileinrichtung aus Fig. 1 in einer Rohrform.

An das im Inneren der um eine Achse 16 drehbaren Rohrform 14 zur Herstellung eines Rohres 15 im Schleuderverfahren (vgl. Fig. 2) aufgenommene Ende einer Zuführleitung 1 für Fasermaterial 2, beispielsweise Glasfaserrovings, ist eine achsparallel zur Rohrachse 16 ausgerichtete, zylinderförmige Kammer 3 vorgesehen (vgl. Figur 1). Die Zuführleitung 1 ist mit der Stirnwand 4 der Kammer 3 zur Mittellängsachse 8 der Kammer 3 versetzt, d. h. außermittig verbunden.

In der Kammer 3 ist ein Flügel 5 vorgesehen, der von einem schematisch angedeuteten Motor 6 in Richtung des Pfeiles 7 in rasche Drehung (etwa 3000 $U^{-1}$) versetzbar ist. Die Drehachse des Flügels 5 fällt mit der Längsachse 8 der Kammer 3 zusammen.

Auf der der Einmündung der Leitung 1 gegenüberliegenden Seite ist der Flügel 5 mit einer kreisrunden Scheibe 9 drehfest verbunden. Diese Scheibe 9 dient zum Abstoppen der Längsbewegung der zugeführten Glasfasern 2.

In der Mantelfläche der Kammer 3 ist eine Austragöffnung 10 vorgesehen, aus der das zugeführte Glasfasermaterial 2 vom rotierten Flügel 5 quer zu seiner Zuführrichtung 11 beschleunigt aus der Kammer 3 austritt, wobei, wie in der Zeichnung angedeutet, die geschnittenen Glasfasern in Richtung der Achse 8, die zu Drehachse 16 der rotierenden Rohrform 14 parallel ist, ausgerichtet bleiben. Um die Führung der aus der Austragöffnung 10 austretenden Glasfasern zu verbessern, ist an der Kammer 3 ein Leitblech 12 befestigt. Das Leitblech 12 verläuft zur Mantelfläche der Kammer 3 und vorzugsweise auch zur Mantelfläche der rotierenden Rohrform 14 im wesentlichen tangential.

Wie bereits weiter oben angedeutet, können über die Leitung 1 bereits geschnittene Glasfaserrovings oder andere Verstärkungsfasern zugeführt werden. Es ist aber auch möglich, den Flügel 5 zum Schneiden von ungeschnitten zugeführten Glasfaserrovings heranzuziehen. In diesem Fall ist die dem Ende der Zuführleitung 1 bzw. der Stirnfläche 4 der Kammer 3 zugekehrte, quer zur Achse 8 verlaufende Kante 13 des Flügels 5 als Schneidkante ausgebildet und schneidet die aus der Leitung 1 in die Kammer 3 zugeführten Fasern zu Faserstücken mit der gewünschten Länge ab.

Die der Stirnwand 4 der Kammer 3 zugekehrte Kante 13 des Flügels 5 befindet sich mit Vorteil im Abstand von der Stirnwand 4.

Patentansprüche:                          0158631

1. Rohr aus faserverstärktem, härtbarem Kunststoff, wobei als Faserverstärkung im härtbaren Kunststoff geschnittene Fasern, insbesondere geschnittener Glasroving, enthalten sind und wobei das Rohr eine oder mehrere Schicht(en) mit annähernd tangential ausgerichteten Verstärkungsfasern und eine oder mehrere weitere gefüllte Schicht(en) aufweist, dadurch gekennzeichnet, daß das Rohr in einer oder mehreren weiteren Schicht(en) eine Faserverstärkung (2) aufweist, deren geschnittene Fasern annähernd parallel zur Längsachse (16) des Rohres (15) ausgerichtet sind.

2. Rohr nach Anspruch 1, dadurch gekennzeichnet, daß das Rohr (15) einen Durchmesser bis 600 mm, vorzugsweise einen Durchmesser von 150 bis 400 mm besitzt.

3. Rohr nach Anspruch 1 oder 2, dadurch gekennzeichnet, daß das Tangential-Axial-Zugfestigkeitsverhältnis in der mit tangential- und mit achsparallel-orientierten Fasern armierten Schicht 5 : 3 beträgt.

4. Rohr nach einem der Ansprüche 1 bis 3, dadurch gekennzeichnet, daß die achsparallel-orientierte Fasern enthaltende Schicht(en) des Rohres (15) mittelbar oder unmittelbar zwischen zwei tangential-orientierte Fasern enthaltende(n) Schicht(en) angeordnet ist (sind).

5. Rohr nach einem der Ansprüche 1 bis 4, dadurch gekennzeichnet, daß außerhalb der achsparallel-orientierte Fasern enthaltenden Schicht von dieser durch eine Schicht mit tangential-orientierten Fasern getrennt eine achsparallel-orientierte Fasern und eine weitere Füllstoff, wie Sand od. dgl. enthaltende Schicht vorgesehen ist.

6. Verfahren zur Herstellung faserverstärkter Rohre aus härtbarem Kunststoff nach den Ansprüchen 1 bis 5 im Schleuderverfahren, bei dem man die Fasern und den Kunststoff sowie allenfalls in der Rohrwandung enthaltene weitere Füllstoffe einer horizontal rotierbaren Form achsparallel zu dieser zuführt, wobei man die Fasern schneidet und die geschnittenen Fasern, insbesondere Glasfaserrovings in das Innere der rotierenden Form über deren Längsrichtung verteilt einträgt und wobei die tangential zu orientierenden Fasern aus der Zuführeinrichtung für die Fasern tangential zur Rohrwandung orientiert austretend in die Form abge-

- 16 -

0158631

legt werden, dadurch gekennzeichnet, daß man die im herzustellenden Rohr mit achsparalleler Orientierung enthaltenen Fasern parallel zur Drehachse der Form ausgerichtet in die Form einführt und ihnen an der Ablegestelle vorzugsweise nach dem Abbremsen ihrer Axialbewegung eine quer zu ihrer Bewegungsrichtung beim Zuführen in die Form orientierte Beschleunigung erteilt, und daß die Fasern vorzugsweise ohne Änderung ihrer Orientierung, d. h. annähernd parallel zur Längsachse der rotierbaren Form in diese eingetragen werden.

7. Verfahren nach Anspruch 6, dadurch gekennzeichnet, daß man die achsparallel-orientiert abzulegenden Fasern beim Ablegen in die Form mechanisch und/oder pneumatisch quer zur ihrer Zuführrichtung beschleunigt.

8. Verfahren nach Anspruch 6 oder 7, dadurch gekennzeichnet, daß man die rotierbare Form auf eine Temperatur von 40°C bis 60°C, insbesondere 50°C bis 55°C vorwärmt, bevor man die unter Erwärmung aushärtenden Kunststoffe in die rotierbare Form einbringt, und daß man das noch warme Rohr aus der rotierbaren Form, vorzugsweise durch Herausziehen in Richtung der Längs- bzw. Drehachse entfernt.

9. Vorrichtung zur Durchführung des Verfahrens nach einem der Ansprüche 6 bis 8 mit einer rotierbaren Rohrform sowie einer Einrichtung zum Zuführen des Fasermaterials und des Kunststoffes in die Rohrform, die über eine Leitung mit einer Verteileinrichtung für das tangential-orientierte Fasermaterial und den Kunststoff verbunden ist, wobei die Verteileinrichtung in das Innere der rotierbaren Rohrform ragt und wobei Rohrform und Verteileinrichtung relativ zueinander in Richtung der Dreh- bzw. Längsachse der Rohrform beweglich sind, und mit einer Einrichtung zum Schneiden des Fasermaterials, dadurch gekennzeichnet, daß eine Verteileinrichtung für das achsparallel-orientierte Fasermaterial vorgesehen ist, wobei an das in das Innere der rotierbaren Rohrform (14) ragende Ende der Zuführleitung (1) - für das achsparallel-orientierte Fasermaterial (2) - eine vorzugsweise zylinderförmige Kammer (3) angeschlossen ist, wobei in der Kammer (3) ein durch einen Motor (6) antreibbarer, um eine zur Drehachse der Rohrform parallele Achse (8) drehbarer Flügel (5) angeordnet ist, daß weiters eine mit dem Flügel (5) drehfest verbundene, quer zur seiner Drehachse (8) ausgerichtete und der Mündung der Zuführleitung (1) gegenüberliegende Scheibe (9) vorgesehen ist, und daß die Kammer (3) an ihrer Mantelfläche eine Austragöffnung (10) für die Verstärkungsfasern aufweist.

10. Vorrichtung nach Anspruch 9, dadurch gekennzeichnet, daß der in der Kammer (3) drehbar gelagerte Flügel (5) kürzer ist als die Kammer (3) und in seiner Breite annähernd dem Durchmesser der Kammer (3) entspricht, wobei zwischen der Stirnwand (4) der Kammer (3) und dem Flügel (5) ein Abstand vorliegt.

11. Vorrichtung nach Anspruch 9 oder 10, dadurch gekennzeichnet, daß die Zuführleitung (1) für das Fasermaterial (2) in der Kammer (3) in ihrer Stirnwand (4) exzentrisch ausmündet.

12. Vorrichtung nach Anspruch 11, dadurch gekennzeichnet, daß die Zuführleitung (1) in der Stirnwand (4) der Kammer (3) bezüglich ihrer Mittellängsachse bzw. der Drehachse (8) des Flügels (5) auf der der Austragöffnung (10) gegenüberliegenden Seite ausmündet.

13. Vorrichtung nach einem der Ansprüche 9 bis 12, dadurch gekennzeichnet, daß an das in Drehrichtung des Flügels (5) gesehen hintere Längsende der Austragöffnung (10) ein annähernd tangential zum zylinderförmigen Mantel der Kammer (3) orientiertes Leitblech (12) vorgesehen ist.

14. Vorrichtung nach Anspruch 13, dadurch gekennzeichnet, daß das Leitblech (12) annähernd tangential zur Mantelfläche der drehbaren Rohrform (14) ausgerichtet ist.

15. Vorrichtung nach einem der Ansprüche 9 bis 14, dadurch gekennzeichnet, daß die der Zuführleitung (1) benachbarte Kante (13) des Flügels (5) als Schneidkante für das Abschneiden des Fasermaterials (2), insbesondere der Glasfaserrovings, ausgebildet ist.

FIG.1

FIG.2

0158631